# EUROPEAN PATENT APPLICATION

(11) **EP 3 734 186 A2**
(43) Date of publication of application: **04.11.2020**
(21) Application number: 20166015.6
(22) Date of filing: 26.03.2020
(51) Int. Cl.: F25B 1/10, F25B 5/02, F25B 9/00, F25B 9/02, F25B 9/10, F25B 40/02, F25B 17/08, F25B 15/00, F25B 25/02, F25B 9/08

(54) **SORPTION-BASED SUBCOOLER**

(30) Priority: 08.04.2019 US 201962830924 P
(71) Applicant: Carrier Corporation, Palm Beach Gardens, FL 33418 (US)
(72) Inventor: HOYSALL, Dhruv Chanakya, East Hartford, CT 06108 (US); FENG, Yinshan, East Hartford, CT 06108 (US); VERMA, Parmesh, East Hartford, CT 06108 (US); HASSEL, Bart Antonie van, East Hartford, CT 06108 (US); RANJAN, Rajiv, East Hartford, CT 06108 (US)
(74) Representative: Dehns

(57) **Abstract**

A cooling system 101 includes a compressor 110, 111, an expansion valve 131, 132, a gas cooler 120 through which a refrigerant received from the compressor 110, 111 passes toward the expansion valve 131, 132 in a supercritical state, an evaporator 140, 141 interposed between the expansion valve 131, 132 and the compressor 110, 111 and a vapor sorption subcooling system 150. The vapor sorption subcooling system 150 includes a desorber 160 disposed to remove heat from refrigerant flowing from the gas cooler 120 toward the expansion valve 131, 132.

## Description

The following description relates to a cooling system and, more particularly, to sorption-based subcoolers.

Currently, chillers typically include an ejector for pressure recovery. In an exemplary case, a compressor compresses a refrigerant and outputs the refrigerant in superheated form to a gas cooler and then, in some cases, to an ejector. When an ejector is provided, the ejector is used for work recovery or pressure recovery of the refrigerant and can outputs the refrigerant in cooled form to an evaporator and the compressor.

Until now, the refrigerant has often been a fluid with either a high greenhouse warming potential (GWP) characteristic or a high ozone depletion potential (ODP) characteristic. This is changing, however, and there is an increasing demand for the use of natural, non-toxic, low-GWP and ODP refrigerants leading to the use of carbon dioxide and other similar fluids as refrigerants in supermarket cooling systems.

These systems can, in certain cases, have low coefficients of performance (COP) at high ambient conditions in which the carbon dioxide moves into supercritical/transcritical fluid zones.

According to a first aspect, the invention provides a cooling system including a compressor, an expansion valve, a gas cooler through which a refrigerant received from the compressor passes toward the expansion valve in a supercritical state, an evaporator interposed between the expansion valve and the compressor and a vapor sorption subcooling system. The vapor sorption subcooling system includes a desorber disposed to remove heat from refrigerant flowing from the gas cooler toward the expansion valve.

Optionally, an ejector is downstream from the desorber.

Optionally, the vapor sorption subcooling system includes a vapor absorption subcooling system.

Optionally, a subcooling refrigerant of the vapor absorption subcooling system includes a natural, low greenhouse warming potential (GWP), low ozone depletion potential (ODP) and non-flammable refrigerant.

Optionally, a subcooling refrigerant of the vapor absorption subcooling system includes carbon dioxide.

Optionally, the vapor absorption subcooling system includes a subcooling compressor, which is receptive of subcooling refrigerant from the desorber, an absorber for subcooling refrigerant absorption by an absorbent, a subcooling gas cooler through which the subcooling refrigerant received from the subcooling compressor passes toward the absorber in a supercritical state and a pump configured to pump at least the absorbent from the desorber to the absorber.

Optionally, the absorbent includes an ionic liquid.

Optionally, the vapor sorption subcooling system includes a vapor adsorption subcooling system.

Optionally, a subcooling refrigerant of the vapor adsorption subcooling system includes a natural, low greenhouse warming potential (GWP), low ozone depletion potential (ODP) and non-flammable refrigerant.

Optionally, a subcooling refrigerant of the vapor adsorption subcooling system includes carbon dioxide.

Optionally, the vapor adsorption subcooling system includes a subcooling compressor, which is receptive of subcooling refrigerant from the desorber, an adsorber disposed in parallel with the desorber for subcooling refrigerant adsorption by an adsorbent and a subcooling gas cooler through which the subcooling refrigerant received from the subcooling compressor passes toward the adsorber and the desorber in a supercritical state.

Optionally, the adsorbent includes a solid adsorbent and the solid adsorbent includes activated carbon or a metal organic framework (MOF).

According to an aspect of the invention, a vapor absorption subcooling system is provided and includes a desorber in which a first refrigerant is cooled, a subcooling compressor, which is receptive of subcooling refrigerant from the desorber, an absorber for subcooling refrigerant absorption by an absorbent, a subcooling gas cooler through which the subcooling refrigerant received from the subcooling compressor passes toward the absorber in a supercritical state and a pump configured to pump at least the absorbent from the desorber to the absorber.

Optionally, the subcooling refrigerant includes a natural, low greenhouse warming potential (GWP), low ozone depletion potential (ODP) and non-flammable refrigerant.

Optionally, the subcooling refrigerant includes carbon dioxide.

Optionally, the absorbent includes an ionic liquid.

According to another aspect of the invention, a vapor adsorption subcooling system is provided and includes a desorber in which a first refrigerant is cooled, a subcooling compressor, which is receptive of subcooling refrigerant from the desorber, an adsorber disposed in parallel with the desorber for subcooling refrigerant adsorption by an adsorbent and a subcooling gas cooler through which the subcooling refrigerant received from the subcooling compressor passes toward the adsorber and the desorber in a supercritical state.

Optionally, the subcooling refrigerant includes a natural, low greenhouse warming potential (GWP), low ozone depletion potential (ODP) and non-flammable refrigerant.

Optionally, the subcooling refrigerant includes carbon dioxide.

Optionally, the adsorbent includes a solid adsorbent and the solid adsorbent includes activated carbon or a metal organic framework (MOF).

Optionally, the desorber includes multiple desorbers, the adsorber includes multiple adsorbers, each one of the multiple adsorbers is paired with a corresponding one of the multiple desorbers to form respective combined beds and each of the combined beds is independently operable at a different adsorption stage.

These and other advantages and features will become more apparent from the following description taken in conjunction with the drawings.

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a schematic diagram illustrating a vapor absorption subcooling system of a cooling system;
FIG. 2 is a graphical depiction of a coefficient of performance capability of the vapor absorption subcooling system of the cooling system of FIG. 1;
FIG. 3 is a schematic diagram illustrating a vapor adsorption subcooling system of a cooling system;
FIG. 4 is a schematic diagram showing another vapor adsorption subcooling system of a cooling system in which the vapor adsorption subcooling system has more than two sorption beds operating at different stages of adsorption and desorption; and
FIG. 5 is a schematic diagram of a controller of the cooling systems of FIGS. 1, 3 and 4.

These and other advantages and features will become more apparent from the following description taken in conjunction with the drawings.

As will be described below, a cooling system for use in a supermarket cooling system, for example, is provided and uses a natural, non-toxic, low-GWP and ODP refrigerant. This refrigerant can be carbon dioxide, which is paired with an absorbent, such as one or more ionic liquids, or a solid adsorbent. The cooling system includes a gas cooler, a vapor absorption/adsorption-based subcooler and a desorber component that provides subcooling to refrigerant exiting the gas cooler. In the particular case of the refrigerant being carbon dioxide and the absorbent being an ionic liquid, the ionic liquid absorbs the carbon dioxide in an exothermic process in which the heat of absorption is rejected to ambient in order to sustain absorption processes (this is similar to the heat of compression needing to be rejected to ambient in a conventional gas cooler).

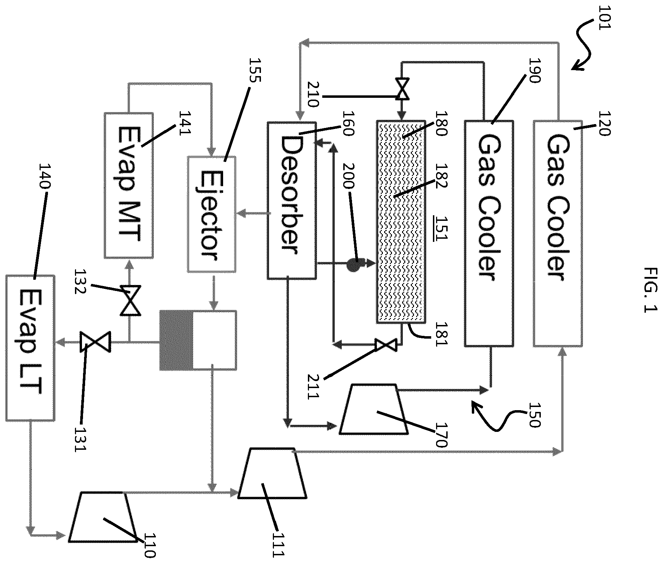

With reference to FIG. 1, a cooling system 101 is provided. The cooling system 101 includes a first, low temperature compressor 110 and a second, high temperature compressor 111. The first, low temperature compressor is configured to compress low temperature refrigerant and to output compressed refrigerant to the second, high temperature compressor 111. The second, high temperature compressor 111 is configured to compress high temperature refrigerant and the compressed refrigerant received from the first, low temperature compressor into compressed or supercritical refrigerant. The cooling system 101 further includes a gas cooler 120, which is disposed downstream from the second, high temperature compressor 111 and which is receptive of the compressed or supercritical refrigerant from the second, high temperature compressor 111. Within the gas cooler 120, the compressed or supercritical refrigerant is cooled slightly before flowing through a desorber 160, an ejector 155 and first and second expansion valves 131 and 132 toward a first, low temperature evaporator 140, which is associated with and upstream from the first, low temperature compressor 110, or through the first expansion valve 131 toward a second, high temperature evaporator 141, which is associated with and upstream from the second, high temperature compressor 111.

The cooling system 101 also includes a vapor sorption subcooling system 150. The vapor sorption subcooling system 150 can be provided as a vapor absorption subcooling system 151 and includes the desorber 160, which is disposed between the gas cooler 120 and the first and second expansion valves 131 and 132 and which is configured to remove heat from the refrigerant flowing from the gas cooler 120 toward the first and second expansion valves 131 and 132. A subcooling refrigerant of the vapor absorption subcooling system 151 can include a natural, low greenhouse warming potential (GWP), low ozone depletion potential (ODP) and non-flammable refrigerant. More particularly, the subcooling refrigerant of the vapor absorption subcooling system 151 can include carbon dioxide.

The cooling system 101 can further include the ejector 155 disposed downstream from the desorber 160. The cooling system 101 in such cases would have subcooling capability from the vapor sorption subcooling system 150 and pressure recovery using the ejector 155. This would result in the cooling system 101 having increased COPs. It is to be understood that the ejector 155 is optional and that embodiments exist in which the ejector 155 is not present in the cooling system 101.

As shown in FIG. 1, in addition to the desorber 160, the vapor absorption subcooling system 151 includes a subcooling compressor 170, which is receptive of subcooling refrigerant from the desorber 160, an absorber 180 for subcooling refrigerant absorption by an absorbent 182, a subcooling gas cooler 190 through which the subcooling refrigerant that is received from the subcooling compressor 170 passes toward the absorber 180 in a supercritical state and a pump 200. The vapor absorption subcooling system 151 further includes a first valve 210, which is disposed immediately downstream from the subcooling gas cooler 190 and immediately upstream from the absorber 180, and a second valve 211, which is disposed immediately downstream from the absorber 180 and immediately upstream from the desorber 160.

The absorber 180 includes an enclosure 181 and the absorbent 182, which is contained within the enclosure 181. The absorbent 182 may include an ionic liquid (see below for example of ionic liquids). While this absorbent 182 (i.e., ionic liquid) is contained within the enclosure 181, it can be used to dissolve the subcooling refrigerant (i.e., carbon dioxide).

**Table 1, Literature values of CO2 absorption by ionic liquids**

| | | Desorption | | | Absorption | | | |
|---|---|---|---|---|---|---|---|---|
| Cation | Anion | Temperature [K] | Pressure [bar] | xCO2 | Temperature [K] | Pressure [bar] | xCO2 | Delta xCO2 |
| [BMIM]+ | [BF4]- | 293.65 | 41 | 0.458 | 313.35 | 105 | 0.61 | 0.152 |
| [BMIM]+ | [BF4]- | 298.2 | 42.1 | 0.4902 | 313.3 | 84.02 | 0.5289 | 0.0387 |
| [BMIM]+ | [PF6]- | 298.2 | 42 | 0.4905 | 313.3 | 84.01 | 0.5941 | 0.1036 |
| [BMIM]+ | [PF6]- | 298.2 | 42 | 0.4905 | 313.3 | 95.47 | 0.5991 | 0.1086 |
| [BMIM]+ | [Tf2N]- | 298.2 | 44.27 | 0.6181 | 313.3 | 110.25 | 0.742 | 0.1239 |
| [BMIM]+ | [SCN]- | 303.15 | 37.5 | 0.345 | 313.15 | 122.5 | 0.422 | 0.077 |
| [BMIM]+ | [C(CN)3]- | 303.15 | 37.9 | 0.502 | 313.15 | 104.6 | 0.633 | 0.131 |
| | | | | | | | | |
| [HMIM]+ | [Tf2N]- | 298.2 | 42.34 | 0.6282 | 313.3 | 97.92 | 0.7478 | 0.1196 |
| [HMIM]+ | [BF4]- | 303.63 | 49.1 | 0.498 | 313.07 | 104.6 | 0.602 | 0.104 |
| [HMIM]+ | [PF6]- | 303.48 | 33.7 | 0.41 | 318.11 | 93.4 | 0.599 | 0.189 |
| | | | | | | | | |
| [EMIM]+ | [Tf2N]- | 298.15 | 32.54 | 0.533 | 323.15 | 100.81 | 0.711 | 0.178 |
| [EMIM]+ | [Tf2N]- | 293.05 | 43 | 0.6448 | 314.05 | 90.5 | 0.7043 | 0.0595 |
| [EMIM]+ | [Tf2N]- | 298.15 | 38.72 | 0.619 | 323.15 | 102.81 | 0.701 | 0.082 |

Where the absorbent 182 includes an ionic liquid, the ionic liquid can be immobilized in an adsorbent. In such cases, the vapor absorption subcooling system 151 is similar to an adsorption system (to be discussed below) where pores of an adsorbent are filled with the ionic liquid (sometimes referred to as an immobilized ionic liquid).

During an operation of the vapor absorption subcooling system 151, the desorber 160 provides subcooling to the refrigerant exiting the gas cooler 120. This is accomplished as follows.

Within the absorber 180, the subcooling refrigerant flowing into the absorber 180 from the subcooling gas cooler 190 is absorbed into the absorbent 182 (i.e., absorption by the subcooling refrigerant being dissolved into the absorbent 182 within the enclosure 182) as part of an exothermic process. The heat of absorption gets rejected to ambient. The absorbent 182 with the subcooling refrigerant absorbed therein flows through the second valve 211 to the desorber 160, which is at a lower pressure than the absorber 180. Within the desorber 160, the subcooling refrigerant desorbs from the absorbent 182 in an endothermic process and provides cooling through a heat transfer surface to the refrigerant flowing from the gas cooler 120. The subcooling refrigerant that desorbs is recompressed by the subcooling compressor 170. At least the absorbent 182 or a mixture of the absorbent 182 and a portion of the subcooling refrigerant is pumped back into the absorber 180 in order to complete the cycle by the pump 200.

Optionally, the absorber 180 and the desorber 160 can be operated in a cyclic mode.

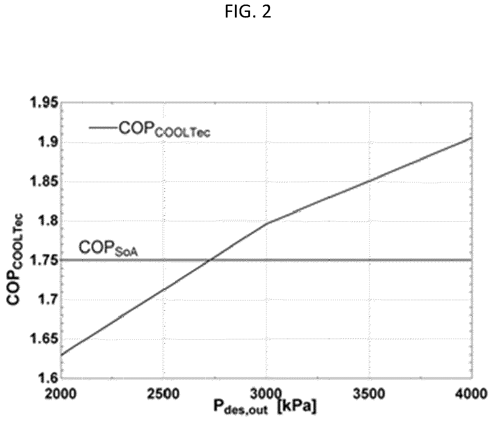

As shown in FIG. 2, the cooling system 101 in combination with the vapor absorption subcooling system 151 has a high COP due to the high heat of desorption which can be 1-10 times higher than the heat of vaporization depending on the absorbent. In particular, with an ionic liquid as the absorbent 182, a subcooler cycle of the vapor absorption subcooling system 151 subcools the refrigerant by about 15°C and operates between 4-7 MPa.

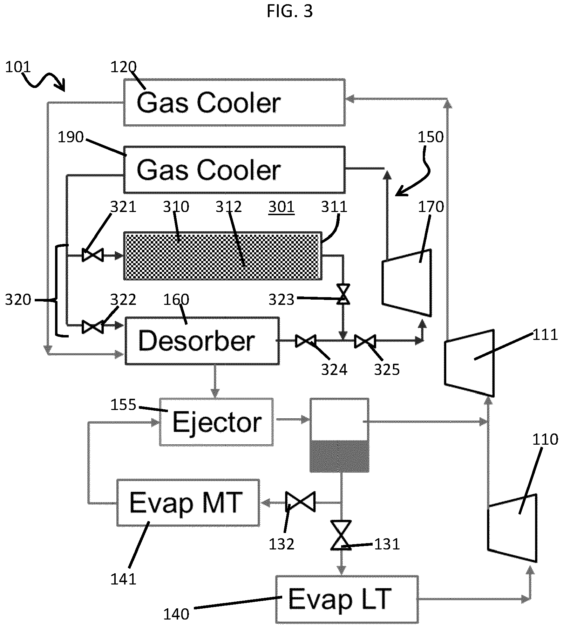

With reference to FIG. 3, the cooling system 101 is provided with the vapor sorption system 150. Here, the vapor sorption subcooling system 150 can be provided as a vapor adsorption subcooling system 301 and includes the desorber 160, which is disposed between the gas cooler 120 and the first expansion valve 131 and which is configured to remove heat from the refrigerant flowing from the gas cooler 120 toward the first and second expansion valves 131 and 132. A subcooling refrigerant of the vapor adsorption subcooling system 301 can include a natural, low greenhouse warming potential (GWP), low ozone depletion potential (ODP) and non-flammable refrigerant. More particularly, the subcooling refrigerant of the vapor adsorption subcooling system 301 can include carbon dioxide.

As shown in FIG. 3, in addition to the desorber 160, the vapor adsorption subcooling system 301 includes the subcooling compressor 170, which is receptive of subcooling refrigerant from the desorber 160, an adsorber 310 for subcooling refrigerant adsorption by an adsorbent 312, a subcooling gas cooler 190 through which the subcooling refrigerant that is received from the subcooling compressor 170 passes toward the adsorber 310 in a supercritical state and a valve system 320. The valve system 320 includes first and second valves 321 and 322, which are respectively disposed upstream from the adsorber 310 and the desorber 160 and which respectively control subcooling refrigerant flows into the adsorber 310 and the desorber 160, as well as third, fourth and fifth valves 323, 324 and 325, which are respectively downstream from the adsorber 310 and the desorber 160 and which are respectively configured to control flows of the subcooling refrigerant to the subcooling compressor 170.

Within the adsorber 310, the subcooling refrigerant flowing into the adsorber 310 from the subcooling gas cooler 190 is adsorbed into the adsorbent 312 as part of an exothermic process. The heat of adsorption gets rejected to ambient.

In accordance with embodiments, adsorption and desorption beds of the adsorber 310 and the desorber 160, respectively, can be operated in a cyclic mode. In addition, the adsorber 310 can include two or more adsorbent beds.

The adsorber 310 includes an enclosure 311 and a solid adsorbent 312 contained within the enclosure 311. In accordance with some embodiments, the solid adsorbent 312 can include or be provided as activated carbon and metal organic frameworks (MOFs).

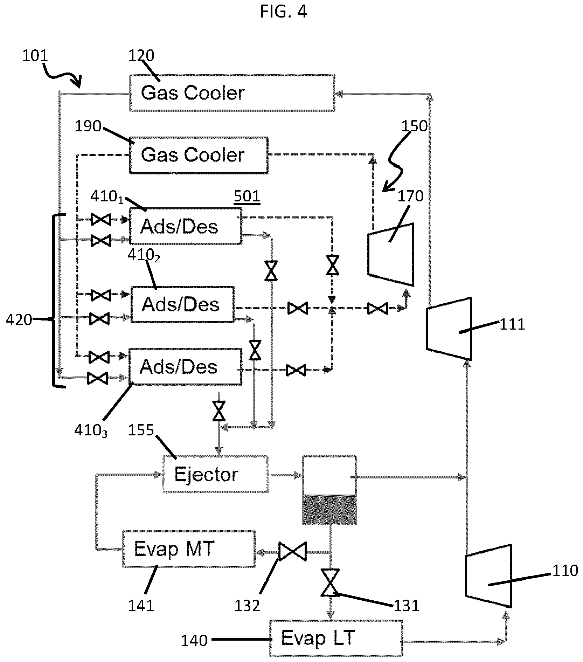

With reference to FIG. 4 and in accordance with further embodiments, the cooling system 101 is provided with the vapor sorption system 150 and the vapor sorption subcooling system 150 can be provided as a vapor adsorption subcooling system 501. The vapor adsorption subcooling system 501 is similar to the vapor adsorption subcooling system 301 but is characterized in that the desorber 160 includes multiple desorbers 160, the adsorber 180 includes multiple adsorbers 180 and each one of the multiple adsorbers 180 is paired with a corresponding one of the multiple desorbers 160 in respective desorber/adsorber beds 410₁, 410₂ and 410₃ that are fed by valve system 420.

The respective desorber/adsorber beds 410₁, 410₂ and 410₃ are operable at different stages of adsorption and desorption to mitigate a potential issue of intermittency in which the desorber 160 switches from desorption mode to adsorption mode. With the presence of the multiple desorbers 160, cooling loads can be maintained by having the different multiple desorbers 160 at different stages of desorption. As one of the multiple desorbers 160 switches from desorption mode to adsorption mode, the other of the multiple desorbers 160 are available to provide cooling effects to satisfy extra cooling requirements.

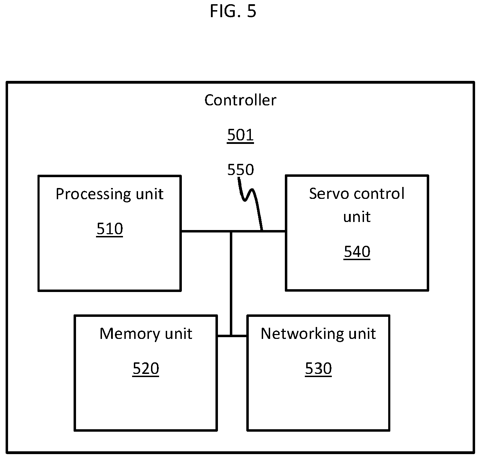

With reference to FIG. 5 and in accordance with further embodiments, a controller 501 can be provided to control various components of the cooling system 101 of at least the embodiments of FIGS. 1, 3 and 4. The controller 501 can include a processing unit 510, a memory unit 520, a networking unit 530, a servo control unit 540 and an input/output (I/O) bus 550 by which the processing unit 510, the memory unit 520, the networking unit 530 and the servo control unit 540 are communicative. The networking unit 530 is configured to enable communications between the processing unit 510 and various sensing elements disposable throughout the cooling system 101 as well as external computing systems. The servo control unit 540 is responsive to instructions issued by the processing unit 510 to thereby control operations of the first and second expansion valves 131 and 132, the first and second valves 210 and 211 of the embodiments of FIG. 1, the pump 200 of the embodiments of FIG. 1, the valve system 320 of FIG. 3 and the valve system 420 of FIG. 4. The memory unit 520 has executable instructions stored thereon, which are readable and executable by the processing unit 510 such that, when the executable instructions are read and executed by the processing unit 510, the executable instructions cause the processing unit 510 to generate and issue the commands to the servo control unit 540.

Technical effects and benefits of the features described herein are the provision of a vapor sorption subcooling system that uses a natural, low ODP, low GWP, non-flammable refrigerant like carbon dioxide for the subcooler system that, when combined with a current cooling system, shows 10% increase in COP.

While the disclosure is provided in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention as defined by the claims. Accordingly, the invention is not to be seen as limited by the foregoing description, but is only limited by the scope of the appended claims.

## Claims

1. A cooling system, comprising:
a compressor;
an expansion valve;
a gas cooler through which a refrigerant received from the compressor passes toward the expansion valve in a supercritical state;
an evaporator interposed between the expansion valve and the compressor; and
a vapor sorption subcooling system comprising a desorber disposed to remove heat from refrigerant flowing from the gas cooler toward the expansion valve.

2. The cooling system according to claim 1, further comprising an ejector downstream from the desorber.

3. The cooling system according to claim 1, wherein the vapor sorption subcooling system comprises a vapor absorption subcooling system.

4. The cooling system according to claim 3, wherein a subcooling refrigerant of the vapor absorption subcooling system comprises a natural, low greenhouse warming potential (GWP), low ozone depletion potential (ODP) and non-flammable refrigerant.

5. The cooling system according to claim 3, wherein a subcooling refrigerant of the vapor absorption subcooling system comprises carbon dioxide.

6. The cooling system according to claim 3, wherein the vapor absorption subcooling system comprises:
a subcooling compressor, which is receptive of subcooling refrigerant from the desorber;
an absorber for subcooling refrigerant absorption by an absorbent;
a subcooling gas cooler through which the subcooling refrigerant received from the subcooling compressor passes toward the absorber in a supercritical state; and
a pump configured to pump at least the absorbent from the desorber to the absorber.

7. The cooling system according to claim 6, wherein the absorbent comprises an ionic liquid.

8. The cooling system according to claim 1, wherein the vapor sorption subcooling system comprises a vapor adsorption subcooling system.

9. The cooling system according to claim 8, wherein a subcooling refrigerant of the vapor adsorption subcooling system comprises a natural, low greenhouse warming potential (GWP), low ozone depletion potential (ODP) and non-flammable refrigerant.

10. The cooling system according to claim 8, wherein a subcooling refrigerant of the vapor adsorption subcooling system comprises carbon dioxide.

11. The cooling system according to claim 8, wherein the vapor adsorption subcooling system comprises:
a subcooling compressor, which is receptive of subcooling refrigerant from the desorber;
an adsorber disposed in parallel with the desorber for subcooling refrigerant adsorption by an adsorbent; and
a subcooling gas cooler through which the subcooling refrigerant received from the subcooling compressor passes toward the adsorber and the desorber in a supercritical state.

12. The cooling system according to claim 11, wherein the adsorbent comprises a solid adsorbent and the solid adsorbent comprises activated carbon or a metal organic framework (MOF).

13. The cooling system according to claim 11, wherein two or more sorption beds are used as adsorbers and desorbers to provide subcooling.

14. A vapor absorption subcooling system, comprising:
a desorber in which a first refrigerant is cooled;
a subcooling compressor, which is receptive of subcooling refrigerant from the desorber;
an absorber for subcooling refrigerant absorption by an absorbent;
a subcooling gas cooler through which the subcooling refrigerant received from the subcooling compressor passes toward the absorber in a supercritical state; and
a pump configured to pump at least the absorbent from the desorber to the absorber.

15. A vapor adsorption subcooling system, comprising:
a desorber in which a first refrigerant is cooled;
a subcooling compressor, which is receptive of subcooling refrigerant from the desorber;
an adsorber disposed in parallel with the desorber for subcooling refrigerant adsorption by an adsorbent; and
a subcooling gas cooler through which the subcooling refrigerant received from the subcooling compressor passes toward the adsorber and the desorber in a supercritical state.
